# FASCICULE DE BREVET EUROPEEN

(11) **EP 4 025 499 B1**
(45) Date de publication et mention de la délivrance du brevet: **16.07.2025**
(21) Numéro de dépôt: 20764383.4
(22) Date de dépôt: 01.09.2020
(51) Int. Cl.: B64D 13/06, B64D 13/08, B61D 27/00

(54) **SYSTÈME DE CONDITIONNEMENT D'AIR À BOUCLE D'EXTRACTION D'EAU INTÉGRÉE**
KLIMAANLAGE MIT INTEGRIERTEM WASSEREXTRAKTIONSKREIS
AIR CONDITIONING SYSTEM WITH INTEGRATED WATER EXTRACTION LOOP

(30) Priorité: 02.09.2019 FR 1909633
(43) Date de publication de la demande: 13.07.2022
(73) Titulaire: Liebherr-Aerospace Toulouse SAS, 31200 Toulouse (FR)
(72) Inventeur: BREGOLI, Mickael, 31016 TOULOUSE Cedex 2 (FR); CARON, Arnaud, 31016 TOULOUSE Cedex 2 (FR); CIAIS, Viviane, 31016 TOULOUSE Cedex 2 (FR)
(74) Mandataire: Bringer IP
(86) Numéro de dépôt international: PCT/EP2020/074275
(87) Numéro de publication internationale: WO 2021/043733

(56) Documents cités:
- EP-A1- 2 868 579
- US-A- 4 503 683
- US-A- 5 915 469
- US-B1- 8 042 354
- ANDRAE R: "LUFTGESTUETZE KLIMATISIERUNG VON REISEZUGWAGEN AIR-BASED AIR CONDITIONING OF PASSENGER CARS CLIMATISATION A BASE D'AIR POUR VOITURES A VOYAGEURS", ZE VRAIL - GLASERS ANNALEN: ZEITSCHRIFT FUER DAS GESAMTE SYSTEM BAHN, GEORG SIEMENS VERLAG GMBH & CO. KG, DE, vol. 124, no. 11, 1 November 2000 (2000-11-01), pages 587 - 592, XP000968768, ISSN: 0941-0589

## Description

### Domaine technique de l'invention

L'invention concerne un système de conditionnement d'air d'un aéronef. En particulier, l'invention concerne un système de conditionnement d'air comprenant une boucle d'extraction d'eau optimisée.

### Arrière-plan technologique

Dans un aéronef, un système de conditionnement d'air permet le traitement de l'air destiné notamment à alimenter la cabine de l'aéronef. Dans tout le texte, le terme « cabine » désigne tout espace intérieur d'un aéronef dont la pression et/ou la température de l'air doit être contrôlée. Il peut s'agir d'une cabine pour passagers, du cockpit de pilotage, d'une soute, et de manière générale de toute zone de l'aéronef qui nécessite un air à une pression et/ou une température contrôlée.

Le traitement de l'air consiste notamment en un ajustement de la température, de la pression, de l'humidité, etc. d'un air provenant d'une source d'air de l'aéronef, formée par exemple par un prélèvement d'air sur les moteurs propulsifs de l'aéronef, communément appelé air bleed. Cette source d'air peut également être un air extérieur à pression dynamique qui est traité par différents équipements pour l'amener à température et pression compatibles avec les besoins de la cabine.

Les systèmes de conditionnement d'air classique comprennent une turbomachine pneumatique comprenant au moins un compresseur et au moins une turbine reliée ensemble par un arbre mécanique, de sorte que le compresseur et la turbine soit entraînés ensemble.

La turbine de la turbomachine est en général associée à un ensemble désigné par les termes de « boucle d'extraction d'eau », comprenant au moins deux échangeurs de chaleur, un premier échangeur de chaleur désigné par le terme de « réchauffeur », un deuxième échangeur de chaleur, désigné par le terme de « condenseur » et un extracteur d'eau, aussi désigné par les termes de « séparateur d'eau ».

La boucle d'extraction est destinée à assécher l'air avant son injection dans la turbine de la turbomachine à cycle à air pour être détendu et distribué vers une chambre de mélange reliée à la cabine de l'aéronef.

Les performances thermodynamiques d'un système de conditionnement d'air (aussi désigné par les termes de pack de conditionnement d'air) sont liées aux performances d'extraction d'eau par la boucle d'extraction d'eau. En outre, une boucle d'extraction d'eau performante permet d'augmenter la fiabilité du pack de conditionnement en évitant l'érosion de la turbine.

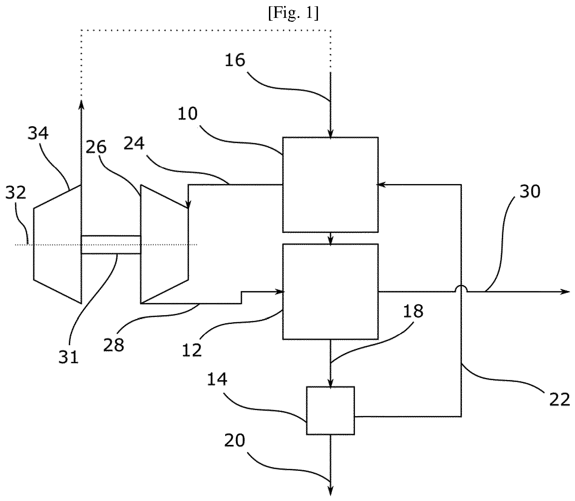

La figure 1 représente schématiquement une boucle d'extraction d'eau et une turbine d'une turbomachine à cycle à air selon une réalisation couramment mise en œuvre sur les aéronefs.

La boucle d'extraction d'eau comprend un réchauffeur 10, un condenseur 12, et un séparateur 14 d'eau. De l'air 16 fourni par le système de conditionnement d'air traverse successivement le réchauffeur 10 et le condenseur 12 en tant que passe chaude. L'air 18 sortant du condenseur traverse le séparateur 14 d'eau qui récupère l'eau 20 pouvant être utilisé dans le système de conditionnement d'air (par exemple injecté dans un canal d'air dynamique de refroidissement, plus connu sous la dénomination d'air ram).

L'air 22 asséché sortant du séparateur 14 d'eau traverse le réchauffeur 10 en tant que passe froide.

L'air 24 sortant du réchauffeur est conduit en entrée de la turbine 26 du système de conditionnement d'air. En sortie de la turbine 26, l'air 28 traverse le condenseur 12 en tant que passe froide et l'air 30 sortant du condenseur est conduit vers la cabine de l'aéronef (après un éventuel passage par une chambre de mélange).

La turbine 26 fait généralement partie d'une turbomachine à cycle air comprenant un arbre 31 de turbomachine sur lequel sont fixés la turbine 26 et un compresseur 34. La turbine 26 permet une récupération d'énergie pour entrainer le compresseur 34, qui compresse l'air du système de conditionnement d'air en amont de la turbine 26. L'arbre 31, la turbine 26 et le compresseur 34 sont configurés pour tourner autour d'un axe 32 de turbomachine. L'air 16 provient du compresseur 34 et peut avoir été soumis à différents traitements, par exemple la traversée d'un échangeur de type échangeur principal pour être refroidi par l'air ram.

Une boucle d'extraction d'eau est donc un élément indispensable mais encombrant des systèmes de conditionnement d'air actuels. En particulier, un certain nombre de conduites sont nécessaires pour relier fluidiquement le réchauffeur, le condenseur, le séparateur d'eau et la turbine de la turbomachine à cycle à air.

Dans la mesure où la place disponible, à bord des aéronefs, réservée aux systèmes de conditionnement d'air est de plus en plus réduite, les inventeurs ont cherché à fournir une nouvelle architecture de boucle d'extraction d'eau permettant de réduire son impact en termes d'encombrement tout en maximisant ses performances.

Les documents EP3584165A1 et US2016/375987A1 divulguent des systèmes de conditionnement d'air d'une cabine d'aéronef.

### Objectifs de l'invention

L'invention vise à fournir un système de conditionnement d'air plus compact.

L'invention vise en particulier à fournir un système de conditionnement d'air présentant une boucle d'extraction d'eau présentant un encombrement limité par rapport aux solutions connues.

L'invention vise aussi à fournir, dans au moins un mode de réalisation, un système de conditionnement d'air comprenant une boucle d'extraction d'eau plus compacte, plus intégrée, et plus performante que dans les systèmes connus.

L'invention vise aussi à fournir, dans au moins un mode de réalisation, un système de conditionnement d'air comprenant une boucle d'extraction d'eau pouvant être fabriquée par fabrication additive.

L'invention vise aussi à fournir un système de conditionnement d'air compatible avec des applications aéronautiques, ferroviaires et automobiles.

L'invention vise enfin à fournir un véhicule de transport tel qu'un aéronef équipé d'un système de conditionnement d'air selon l'invention.

### Exposé de l'invention

Pour ce faire, l'invention concerne un système de conditionnement d'air d'une cabine d'un véhicule de transport aérien ou ferroviaire selon la revendication 1.

Un système de conditionnement d'air selon l'invention permet donc de réduire de façon importante l'encombrement de la boucle d'extraction d'eau en agençant le réchauffeur, le condenseur et le séparateur d'eau sur ou autour de l'axe de turbomachine.

L'agencement en série des éléments du réchauffeur, du condenseur et du séparateur d'eau s'entend d'un point de vue fluidique, le fluide sortant du compresseur traversant une première fois dans l'ordre le réchauffeur, puis le condenseur, et enfin le séparateur d'eau.

En outre, les performances de la boucle d'extraction d'eau sont améliorées par la proximité des éléments entre eux, et la proximité avec la turbine, en particulier grâce à la réduction des pertes de charge.

L'invention permet d'intégrer les fonctions du réchauffeur, du condenseur et du séparateur d'eau sur l'axe ou de manière annulaire autour de l'axe de turbomachine.

De préférence, les différents composants de la boucle d'extraction d'eau sont chacun annulaires ou cylindriques pour pouvoir s'intégrer autour de l'axe de la turbomachine et/ou présentent une symétrie de révolution selon l'axe de la turbomachine.

Avantageusement et selon l'invention, le réchauffeur est choisi parmi les variantes suivantes :
- un échangeur de chaleur à flux croisés, dans lequel un premier flux formé par une passe d'air froide et un deuxième flux formé par une passe d'air chaude sont croisés ;
- un échangeur de chaleur à flux co-courant, dans lequel un premier flux formé par une passe d'air froide et un deuxième flux formé par une passe d'air chaude sont parallèles et dans le même sens ;
- un échangeur de chaleur à flux contre-courant, dans lequel un premier flux formé par une passe d'air froide et un deuxième flux formé par une passe d'air chaude sont parallèles et dans un sens contraire.

Selon cet aspect de l'invention, le réchauffeur peut prendre différentes formes selon les performances souhaitées, les pertes de charges tolérées, la configuration du système de conditionnement d'air, les équipements attenants au système de conditionnement d'air lorsque celui-ci est intégré dans un véhicule, etc.

Avantageusement et selon l'invention, le condenseur est choisi parmi les variantes suivantes :
- un échangeur de chaleur à flux croisés, dans lequel un premier flux formé par une passe d'air froide et un deuxième flux formé par une passe d'air chaude sont croisés ;
- un échangeur de chaleur à flux co-courant, dans lequel un premier flux formé par une passe d'air froide et un deuxième flux formé par une passe d'air chaude sont parallèles et dans le même sens ;
- un échangeur de chaleur à flux contre-courant, dans lequel un premier flux formé par une passe d'air froide et un deuxième flux formé par une passe d'air chaude sont parallèles et dans un sens contraire.

Selon cet aspect de l'invention, le condenseur peut prendre différentes formes selon les performances souhaitées, les pertes de charges tolérées, la configuration du système de conditionnement d'air, les équipements attenants au système de conditionnement d'air lorsque celui-ci est intégré dans un véhicule, etc.

Avantageusement et selon l'invention, le condenseur est agencé de sorte qu'une entrée d'une passe d'air froide du condenseur soit dans l'axe de la turbomachine, en regard de la sortie d'air de la turbine.

Selon cet aspect de l'invention, le condenseur reçoit directement l'air sortant de la turbine pour former la passe d'air froide. La passe d'air froide permet de refroidir la passe d'air chaude du condenseur, après le passage dans le réchauffeur et avant le passage dans le séparateur d'eau.

Avantageusement et selon l'invention, le séparateur d'eau est formé d'au moins deux sous-séparateurs d'eau, chaque sous-séparateur d'eau étant directement intégré dans le condenseur, au niveau d'une sortie d'une passe d'air chaude de celui-ci.

Selon cet aspect de l'invention, le séparateur d'eau est directement intégré dans la sortie du condenseur, permettant un gain en compacité et une réduction des pertes de charges.

L'invention concerne également un véhicule de transport, aérien ou ferroviaire, comprenant une cabine configurée pour être alimentée en air conditionné, caractérisé en ce qu'il comprend un système de conditionnement d'air selon l'invention, configuré pour alimenter en air conditionné la cabine.

L'invention concerne également un système de conditionnement d'air et un véhicule de transport, caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique d'une boucle d'extraction d'eau selon l'art antérieur, déjà décrite ;
[Fig. 2] est une vue schématique en coupe d'un système de conditionnement d'air selon un premier mode de réalisation de l'invention ;
[Fig. 3] est une vue schématique en coupe d'un système de conditionnement d'air selon un deuxième mode de réalisation de l'invention ;
[Fig. 4] est une vue schématique en coupe d'un système de conditionnement d'air selon un troisième mode de réalisation de l'invention ;
[Fig. 5] est une vue schématique en coupe d'un système de conditionnement d'air selon un quatrième mode de réalisation de l'invention.

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.
La figure 1 déjà décrite, illustre le principe de fonctionnement général d'une boucle d'extraction d'eau. Les différents modes de réalisation décrits ci-après reprennent ce principe de fonctionnement en ce qui concerne les éléments composant la boucle d'extraction d'eau, le flux d'air du circuit de conditionnement d'air et les différentes étapes de la traversée de ce flux d'air dans les différents éléments de la boucle d'extraction d'eau.

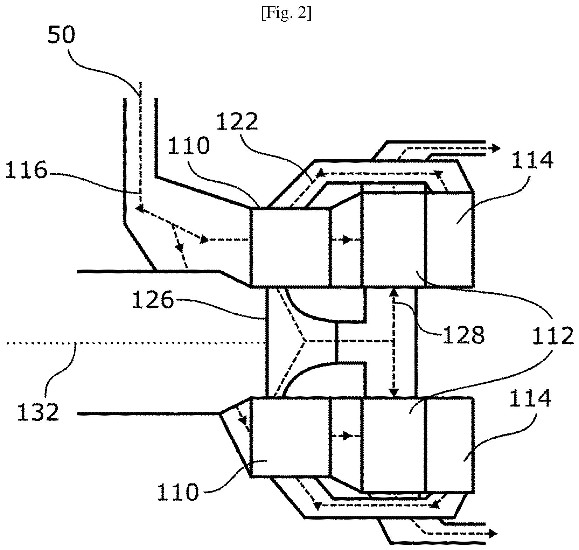

Les figures 2 à 5 représentent quatre modes de réalisation de l'invention dans lesquels le réchauffeur, le condenseur et le séparateur d'eau de la boucle d'extraction d'eau sont agencés en série sur l'axe ou autour dudit axe d'une turbomachine comprenant un compresseur et une turbine, en formant l'entrée d'air de ladite turbine.

Les figures représentent la turbine et la boucle d'extraction d'eau en coupe selon un plan comprenant l'axe de la turbomachine.

L'invention permet donc, dans tous ces modes de réalisation, de fournir une boucle d'extraction d'eau compacte et bien intégrée autour de la turbine.

La boucle d'extraction d'air est alimentée, dans tous les modes de réalisations, par une source 50 d'air, circulant dans le système de conditionnement d'air, en particulier provenant d'une sortie d'un échangeur principal d'un système de conditionnement d'air classique.

La figure 2 représente un premier mode de réalisation de l'invention, dans lequel :
- le réchauffeur 110 est un échangeur de chaleur dit à flux croisés, c'est-à-dire que le flux 116 d'air formant la passe chaude du réchauffeur et le flux 122 d'air formant la passe froide du réchauffeur sont croisés, par exemple sensiblement perpendiculaires ou selon un autre angle de préférence compris entre 45° et 90° ;
- le réchauffeur 110 est cylindrique et entoure l'axe 132 de turbomachine et la turbine 126, de sorte que la sortie de la passe froide du réchauffeur débouche directement dans l'entrée d'air de la turbine 126 ;
- le condenseur 112 est un échangeur de chaleur dit à flux croisés, c'est-à-dire que le flux 116 d'air formant la passe chaude du condenseur et le flux 128 d'air formant la passe froide du condenseur sont croisés, par exemple sensiblement perpendiculaires ou selon un autre angle de préférence compris entre 45° et 90° ;
- le condenseur 112 est cylindrique, entoure l'axe 132 de turbomachine et débouche directement dans le séparateur 114 ;
- le séparateur 114 d'eau, alimenté directement par le condenseur 112 (c'est-à-dire sans tuyauterie entre le condenseur et le séparateur d'eau), entoure également l'axe 132 de la turbomachine.

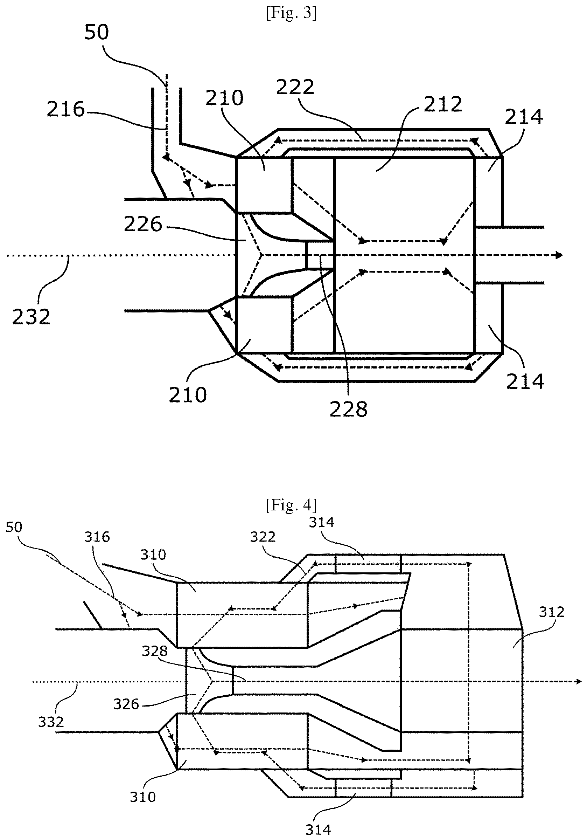

La figure 3 représente un deuxième mode de réalisation de l'invention, dans lequel :
- le réchauffeur 210 est un échangeur de chaleur dit à flux croisés, c'est-à-dire que le flux 216 d'air formant la passe chaude du réchauffeur et le flux 228 d'air formant la passe froide du réchauffeur sont croisés, par exemple sensiblement perpendiculaires ou selon un autre angle de préférence compris entre 45° et 90° ;
- le réchauffeur 210 est cylindrique et entoure l'axe 232 de turbomachine et la turbine 226, de sorte que la sortie de la passe froide du réchauffeur débouche directement dans l'entrée d'air de la turbine ;
- le condenseur 212 est un échangeur de chaleur dit à flux co-courants, c'est-à-dire que le flux 216 d'air formant la passe chaude du condenseur et le flux 222 d'air formant la passe froide du condenseur sont sensiblement parallèles et circulent dans le même sens ;
- le condenseur 212 est cylindrique et entoure l'axe 232 de turbomachine ; la sortie de la turbine débouche directement dans l'entrée de la passe froide du condenseur 212, agencée dans l'axe de la turbomachine, et la sortie du condenseur 212 débouche directement dans le séparateur 214 d'eau ;
- le séparateur 214 d'eau, alimenté directement par le condenseur 212 (c'est-à-dire sans tuyauterie entre le condenseur et le séparateur d'eau) entoure l'axe 232 de la turbomachine.

La figure 4 représente un troisième mode de réalisation de l'invention, dans lequel :
- le réchauffeur 310 est un échangeur de chaleur dit à flux contre-courant, c'est-à-dire que le flux 316 d'air formant la passe chaude du réchauffeur et le flux 328 d'air formant la passe froide du réchauffeur sont sensiblement parallèles et circulent dans des sens opposés ;
- le réchauffeur 310 est cylindrique et entoure l'axe 332 de turbomachine et la turbine 326, de sorte que la sortie de la passe froide du réchauffeur débouche directement dans l'entrée d'air de la turbine ;
- le condenseur 312 est un échangeur de chaleur dit à flux croisés, c'est-à-dire que le flux 316 d'air formant la passe chaude du condenseur et le flux 328 d'air formant la passe froide du condenseur sont croisés, par exemple sensiblement perpendiculaires ou selon un autre angle de préférence compris entre 45° et 90° ;
- le condenseur 312 entoure l'axe de turbomachine ; l'entrée de la passe froide du condenseur 212 est alimentée directement par la sortie de la turbine (c'est-à-dire sans tuyauterie entre la sortie de la turbine et l'entrée de la passe froide du condenseur) et agencée dans l'axe 332 de la turbomachine ;
- le condenseur 312 est double, c'est-à-dire que chaque passe chaude traverse l'intégralité du condenseur 312 selon une direction perpendiculaire à l'axe de la turbomachine ;
- le séparateur 314 d'eau entoure l'axe 332 de la turbomachine.

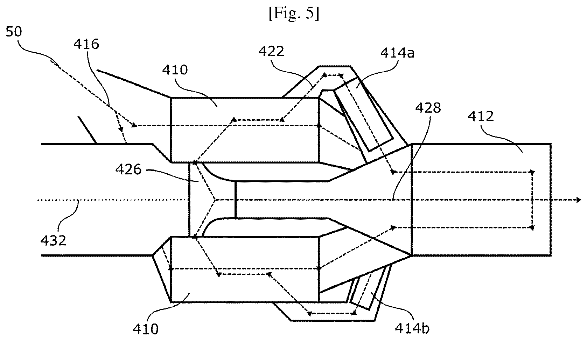

La figure 5 représente un quatrième mode de réalisation de l'invention, dans lequel :
- le réchauffeur 410 est un échangeur de chaleur dit à flux contre-courant, c'est-à-dire que le flux 416 d'air formant la passe chaude du réchauffeur et le flux 428 d'air formant la passe froide du réchauffeur sont sensiblement parallèles et circulent dans des sens opposés ;
- le réchauffeur 410 est cylindrique et entoure l'axe 432 de turbomachine et la turbine 426, de sorte que la sortie de la passe froide du réchauffeur débouche directement dans l'entrée d'air de la turbine ;
- le condenseur 412 est un échangeur de chaleur dit à flux en U, c'est-à-dire que le flux 416 d'air formant la passe chaude du condenseur et le flux 428 d'air formant la passe froide du condenseur sont sensiblement parallèles, et le flux 416 d'air formant la passe chaude circule successivement dans le même sens puis dans un sens contraire au flux 428 d'air formant la passe froide du condenseur ;
- le condenseur 412 entoure l'axe 432 de turbomachine ; l'entrée de la passe froide du condenseur 412 est alimentée directement par la sortie de la turbine (c'est-à-dire sans tuyauterie entre la sortie de la turbine et l'entrée du condenseur) et agencée dans l'axe de la turbomachine ;
- le séparateur d'eau est composé de plusieurs sous-séparateurs 414a, 414b d'eau, chacun étant intégré dans une sortie de passe chaude du condenseur 412, les sous-séparateurs 414a, 414b étant disposés tout autour de l'axe 432 de la turbomachine.

L'invention ne se limite pas aux modes de réalisation représentés, différents types de réchauffeur, condenseur et séparateur d'eau pouvant être utilisés, dans différentes configurations non représentées dans la mesure où ils entrent dans le champ d'application des revendications annexées.

## Revendications

1. Système de conditionnement d'air d'une cabine d'un véhicule de transport aérien ou ferroviaire comprenant :
- une turbomachine pneumatique comprenant au moins un compresseur et au moins une turbine (126, 226, 326, 426) reliée par un arbre mécanique s'étendant le long d'un axe, dit axe (132, 232, 332, 432) de turbomachine, ladite turbine comprenant une entrée d'air et une sortie d'air,
- une boucle d'extraction d'eau comprenant un réchauffeur (110, 210, 310, 410), un condenseur (112, 212, 312, 412) et un séparateur (114, 214, 314, 414) d'eau, agencée fluidiquement entre une sortie d'air du compresseur et l'entrée d'air de ladite turbine (126, 226, 326, 426), configurée pour pouvoir assécher l'air qui alimente ladite turbine (126, 226, 326, 426),
- ledit réchauffeur (110, 210, 310, 410), ledit condenseur (112, 212, 312, 412) et ledit séparateur (114, 214, 314, 414) d'eau étant agencés en série en formant l'entrée d'air de ladite turbine (126, 226, 326, 426) ;
- ledit réchauffeur (110, 210, 310, 410) est agencé sur l'axe ou autour dudit axe (132, 232, 332, 432) de turbomachine ;
- ledit condenseur (112, 212, 312, 412) étant agencé sur l'axe ou autour dudit axe (132, 232, 332, 432) de turbomachine ;
- ledit séparateur (114, 214, 314, 414) d'eau étant agencé sur l'axe ou autour dudit axe (132, 232, 332, 432) de turbomachine, **caractérisé en ce que**
- ledit réchauffeur (110, 210, 310, 410) est cylindrique et entoure l'axe (132, 232, 332, 432) de la turbomachine et la turbine (126, 226, 326, 426), de sorte que la sortie de la passe froide du réchauffeur débouche directement dans l'entrée d'air de la turbine.

2. Système de conditionnement d'air selon la revendication 1, **caractérisé en ce que** le réchauffeur (110, 210) est un échangeur de chaleur à flux croisés, dans lequel un premier flux formé par une passe d'air froide et un deuxième flux formé par une passe d'air chaude sont croisés.

3. Système de conditionnement d'air selon la revendication 1, **caractérisé en ce que** le réchauffeur est un échangeur de chaleur à flux co-courant, dans lequel un premier flux formé par une passe d'air froide et un deuxième flux formé par une passe d'air chaude sont parallèles et dans le même sens.

4. Système de conditionnement d'air selon la revendication 1, **caractérisé en ce que** le réchauffeur (310, 410) est un échangeur de chaleur à flux contre-courant, dans lequel un premier flux formé par une passe d'air froide et un deuxième flux formé par une passe d'air chaude sont parallèles et dans un sens contraire.

5. Système de conditionnement d'air selon l'une des revendications 1 à 4, **caractérisé en ce que** le condenseur (112, 312) est un échangeur de chaleur à flux croisés, dans lequel un premier flux formé par une passe d'air froide et un deuxième flux formé par une passe d'air chaude sont croisés.

6. Système de conditionnement d'air selon l'une des revendications 1 à 4, **caractérisé en ce que** le condenseur (212) est un échangeur de chaleur à flux co-courant, dans lequel un premier flux formé par une passe d'air froide et un deuxième flux formé par une passe d'air chaude sont parallèles et dans le même sens.

7. Système de conditionnement d'air selon l'une des revendications 1 à 4, **caractérisé en ce que** le condenseur est un échangeur de chaleur à flux contre-courant, dans lequel un premier flux formé par une passe d'air froide et un deuxième flux formé par une passe d'air chaude sont parallèles et dans un sens contraire.

8. Système de conditionnement d'air selon l'une des revendications 1 à 7, **caractérisé en ce que** le condenseur (112, 212, 312, 412) est agencé de sorte qu'une entrée d'une passe d'air froide du condenseur (112, 212, 312, 412) soit dans l'axe (132, 232, 332, 432) de la turbomachine, en regard de la sortie d'air de la turbine (126, 226, 326, 426).

9. Système de conditionnement d'air selon l'une des revendications 1 à 8, **caractérisé en ce que** le séparateur d'eau est formé d'au moins deux sous-séparateurs (414a ; 414b) d'eau, chaque sous-séparateur d'eau étant directement intégré dans le condenseur (412), au niveau d'une sortie d'une passe d'air chaude de celui-ci.

10. Système de conditionnement selon l'une des revendications 1 à 9, **caractérisé en ce que** ledit condenseur et ledit séparateur d'eau sont chacun annulaires ou cylindriques pour pouvoir s'intégrer autour de l'axe de la turbomachine et/ou présentent une symétrie de révolution selon l'axe de la turbomachine.

11. Véhicule de transport aérien ou ferroviaire, comprenant une cabine configurée pour être alimentée en air conditionné, **caractérisé en ce qu'**il comprend un système de conditionnement d'air selon l'une des revendications 1 à 10, configuré pour alimenter en air conditionné ladite cabine.

## Patentansprüche

1. Klimaanlage für die Kabine eines Luft- oder Schienenfahrzeugs, welche umfasst:
- ein pneumatisches Turbinentriebwerk, das mindestens einen Verdichter und mindestens eine Turbine (126, 226, 326, 426) umfasst, die durch eine mechanische Welle verbunden ist, die sich entlang einer Achse erstreckt, die als Turbinentriebwerksachse (132, 232, 332, 432) bezeichnet wird, worin die Turbine einen Lufteinlass und einen Luftauslass umfasst, und
- einen Wasserentnahmekreislauf, der einen Heizer (110, 210, 310, 410), einen Kondensator (112, 212, 312, 412) und einen Wasserabscheider (114, 214, 314, 414) umfasst, und welcher strömungstechnisch zwischen einem Luftauslass des Verdichters und dem Lufteinlass der Turbine (126, 226, 326, 426) angeordnet ist und ausgestaltet ist, die der Turbine (126, 226, 326, 426) zugeführte Luft zu trocknen,
- worin der Heizer (110, 210, 310, 410), der Kondensator (112, 212, 312, 412) und der Wasserabscheider (114, 214, 314, 414) in Reihe angeordnet sind und den Lufteinlass der Turbine (126, 226, 326, 426) bilden;
- worin der Heizer (110, 210, 310, 410) auf der Turbinentriebwerksachse (132, 232, 332, 432) oder um diese Achse herum angeordnet ist;
- worin der Kondensator (112, 212, 312, 412) auf der Turbinentriebwerksachse (132, 232, 332, 432) oder um diese Achse herum angeordnet ist;
- worin der Wasserabscheider (114, 214, 314, 414) auf der Turbinentriebwerksachse (132, 232, 332, 432) oder um diese Achse herum angeordnet ist, **dadurch gekennzeichnet, dass**
- der Heizer (110, 210, 310, 410) zylindrisch ist und die Turbinentriebwerksachse (132, 232, 332, 432) und die Turbine (126, 226, 326, 426) umgibt, so dass der Auslass des kalten Durchgangs des Heizers direkt in den Lufteinlass der Turbine mündet.

2. Klimaanlage nach Anspruch 1, **dadurch gekennzeichnet, dass** das Heizgerät (110, 210) ein Kreuzstromwärmetauscher ist, bei dem sich ein erster Strom, der durch eine Kaltluftpassage gebildet wird, und ein zweiter Strom kreuzen, der durch eine Warmluftpassage gebildet wird.

3. Klimaanlage nach Anspruch 1, **dadurch gekennzeichnet, dass** das Heizgerät ein Gleichstromwärmetauscher ist, bei dem ein erster Strom, der durch eine Kaltluftpassage gebildet wird, und ein zweiter Strom, der durch eine Warmluftpassage gebildet wird, parallel und in der gleichen Richtung verlaufen.

4. Klimaanlage nach Anspruch 1, **dadurch gekennzeichnet, dass** das Heizgerät (310, 410) ein Gegenstromwärmetauscher ist, bei dem eine erste Strömung, die durch eine Kaltluftpassage gebildet wird, und eine zweite Strömung, die durch eine Warmluftpassage gebildet wird, parallel und in entgegengesetzten Richtungen verlaufen.

5. Klimaanlage nach einem der Ansprüche 1 bis 4, **dadurch gekennzeichnet, dass** der Kondensator (112, 312) ein Kreuzstromwärmetauscher ist, bei dem sich ein erster Strom, der durch eine Kaltluftpassage gebildet wird, und ein zweiter Strom kreuzen, der durch eine Warmluftpassage gebildet wird.

6. Klimaanlage nach einem der Ansprüche 1 bis 4, **dadurch gekennzeichnet, dass** der Kondensator (212) ein Gleichstromwärmetauscher ist, bei dem ein erster Strom, der durch eine Kaltluftpassage gebildet wird, und ein zweiter Strom, der durch eine Warmluftpassage gebildet wird, parallel und in der gleichen Richtung verlaufen.

7. Klimaanlage nach einem der Ansprüche 1 bis 4, **dadurch gekennzeichnet, dass** der Kondensator ein Gegenstromwärmetauscher ist, bei dem ein erster Strom, der durch eine Kaltluftpassage gebildet wird, und ein zweiter Strom, der durch eine Warmluftpassage gebildet wird, parallel und in entgegengesetzten Richtungen verlaufen.

8. Klimaanlage nach einem der Ansprüche 1 bis 7, **dadurch gekennzeichnet, dass** der Kondensator (112, 212, 312, 412) so angeordnet ist, dass ein Einlass eines Kaltluftdurchlasses des Kondensators (112, 212, 312, 412) in der Achse (132, 232, 332, 432) des Turbinentriebwerks und gegenüber dem Luftauslass der Turbine (126, 226, 326, 426) liegt.

9. Klimaanlage nach einem der Ansprüche 1 bis 8, **dadurch gekennzeichnet, dass** der Wasserabscheider aus mindestens zwei Teil-Wasserabscheidern (414a; 414b) gebildet ist, wobei jeder Teil-Wasserabscheider direkt in den Kondensator (412) an einem Auslass einer Warmluftpassage des Kondensators integriert ist.

10. Konditionierungssystem nach einem der Ansprüche 1 bis 9, **dadurch gekennzeichnet, dass** der Kondensator und der Wasserabscheider jeweils ringförmig oder zylindrisch sind, um um die Turbinentriebwerksachse herum integriert werden zu können und/oder eine Rotationssymmetrie entlang der Turbinentriebwerksachse aufzuweisen.

11. Luft- oder Schienenfahrzeug mit einer Kabine, die ausgestaltet ist, mit klimatisierter Luft versorgt zu werden, **dadurch gekennzeichnet, dass** das Fahrzeug eine Klimaanlage nach einem der Ansprüche 1 bis 10 umfasst, die zur Versorgung der Kabine mit klimatisierter Luft ausgestaltet ist.

## Claims

1. Air conditioning system for a cabin of an air or rail transport vehicle, comprising:
- a pneumatic turbine engine that comprises at least one compressor and at least one turbine (126, 226, 326, 426) and is connected by a mechanical shaft extending along an axis, referred to as the turbine engine axis (132, 232, 332, 432), said turbine comprising an air inlet and an air outlet, and
- a water extraction loop that comprises a heater (110, 210, 310, 410), a condenser (112, 212, 312, 412), and a water separator (114, 214, 314, 414), is arranged fluidically between an air outlet of the compressor and the air inlet of said turbine (126, 226, 326, 426), and is configured to be able to dry the air supplied to said turbine (126, 226, 326, 426),
- said heater (110, 210, 310, 410), said condenser (112, 212, 312, 412), and said water separator (114, 214, 314, 414) being arranged in series, forming the air inlet of said turbine (126, 226, 326, 426);
- said heater (110, 210, 310, 410) is arranged on the turbine engine axis (132, 232, 332, 432) or around said axis;
- said condenser (112, 212, 312, 412) being arranged on the turbine engine axis (132, 232, 332, 432) or around said axis;
- said water separator (114, 214, 314, 414) being arranged on the turbine engine axis (132, 232, 332, 432) or around said axis, **characterized in that**
- said heater (110, 210, 310, 410) is cylindrical and surrounds the axis (132, 232, 332, 432) of the turbine engine and the turbine (126, 226, 326, 426), so that the outlet of the cold pass of the heater opens directly into the air inlet of the turbine.

2. Air conditioning system according to claim 1, **characterized in that** the heater (110, 210) is a cross-flow heat exchanger, in which a first flow formed by a cold air pass and a second flow formed by a hot air pass cross.

3. Air conditioning system according to claim 1, **characterized in that** the heater is a co-current flow heat exchanger, in which a first flow formed by a cold air pass and a second flow formed by a hot air pass are parallel and in the same direction.

4. Air conditioning system according to claim 1, **characterized in that** the heater (310, 410) is a counter-current flow heat exchanger, in which a first flow formed by a cold air pass and a second flow formed by a hot air pass are parallel and in opposite directions.

5. Air conditioning system according to any of claims 1 to 4, **characterized in that** the condenser (112, 312) is a cross-flow heat exchanger, in which a first flow formed by a cold air pass and a second flow formed by a hot air pass cross.

6. Air conditioning system according to any of claims 1 to 4, **characterized in that** the condenser (212) is a co-current flow heat exchanger, in which a first flow formed by a cold air pass and a second flow formed by a hot air pass are parallel and in the same direction.

7. Air conditioning system according to any of claims 1 to 4, **characterized in that** the condenser is a counter-current flow heat exchanger, in which a first flow formed by a cold air pass and a second flow formed by a hot air pass are parallel and in opposite directions.

8. Air conditioning system according to any of claims 1 to 7, **characterized in that** the condenser (112, 212, 312, 412) is arranged such that an inlet of a cold air pass of the condenser (112, 212, 312, 412) is in the axis (132, 232, 332, 432) of the turbine engine, opposite the air outlet of the turbine (126, 226, 326, 426).

9. Air conditioning system according to any of claims 1 to 8, **characterized in that** the water separator is formed of at least two water sub-separators (414a; 414b), each water sub-separator being directly integrated into the condenser (412) at an outlet of a hot air pass of said condenser.

10. Conditioning system according to any of claims 1 to 9, **characterized in that** said condenser, and said water separator are each annular or cylindrical in order to be able to be integrated around the axis of the turbine engine and/or have rotational symmetry along the axis of the turbine engine.

11. Air or rail transport vehicle, comprising a cabin configured to be supplied with conditioned air, **characterized in that** said vehicle comprises an air conditioning system according to any of claims 1 to 10 which is configured to supply said cabin with conditioned air.
